(19) Europäisches Patentamt / European Patent Office / Office européen des brevets

(11) **EP 2 782 044 B1**

(12) **FASCICULE DE BREVET EUROPEEN**

(45) Date de publication et mention
de la délivrance du brevet:
**18.09.2019 Bulletin 2019/38**

(51) Int Cl.:
***G06K 7/10*** *(2006.01)*

(21) Numéro de dépôt: **13159739.5**

(22) Date de dépôt: **18.03.2013**

(54) **Procédé de lecture d'un code-barres**

Leseverfahren eines Strichcodes

Method for reading a barcode

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**24.09.2014 Bulletin 2014/39**

(73) Titulaire: **EM Microelectronic-Marin SA
2074 Marin (CH)**

(72) Inventeurs:
• **Entringer, Christophe
1426 Corcelles-près-Consise (CH)**
• **Coltier, Julien
25790 Les Gras (CH)**

(74) Mandataire: **Surmely, Gérard et al
ICB
Ingénieurs Conseils en Brevets SA
Faubourg de l'Hôpital 3
2001 Neuchâtel (CH)**

(56) Documents cités:
**US-A1- 2004 217 172 US-A1- 2006 082 557
US-A1- 2009 110 325**

## Description

### Domaine technique

La présente invention concerne le domaine des procédés de lecture d'un code-barres au moyen d'un dispositif de lecture optique agencé pour capturer, avec une certaine fréquence d'échantillonnage, une succession d'images partielles du code-barres sur un capteur de ce dispositif de lecture. En d'autres termes, la lecture est effectuée par un balayage optique (en anglais 'a optical scan / scanning') du code-barres. Cette lecture consiste en la capture d'images partielles que le capteur transforme en signaux électriques analogiques, ces derniers étant traités et convertis en signaux digitaux ou/et numériques pour finalement obtenir une séquence de bits.

En général, un code-barres comprend une pluralité de barres avec des largeurs variables qui définissent une séquence de bits.

### Arrière-plan technologique

Plusieurs dispositifs de lecture de codes-barres ont été proposés. Des premiers dispositifs sont conçus pour lire l'entier du code-barres en une seule prise de vue. Ces premiers dispositifs nécessitent de longs capteurs qui sont coûteux et ils sont encombrants. Des deuxièmes dispositifs de lecture sont du type scanner optique. Dans ce cas, le code-barres est balayé par un faisceau lumineux dont la réflexion est reçue par un capteur optique. Dans le cas où le capteur reste fixe comme dans le brevet US 5,272,323, ce capteur a une longueur similaire à celui des premiers dispositifs. Dans tous les cas connus, que le capteur soit fixe ou qu'il soit prévu mobile lors du scan, la vitesse de balayage doit être contrôlée, en particulier maintenue constante. Ceci complique le procédé de lecture et limite les applications pour des dispositifs de lecture portables. De tels dispositifs de lecture ne sont pas adaptés à une lecture d'un code-barres en mouvement avec une vitesse non constante, comme dans le cas d'une chute ou d'un glissement sur un plan incliné avec accélération.

Le document US 2009/0110325 divulgue un dispositif de lecture de codes-barres à l'aide d'un capteur de lumière comprenant au moins un pixel. Le procédé décrit propose de déterminer pour chaque pixel un propre signal logique qui est défini par le défilement au cours du temps d'un code-barres en regard du capteur et par une fréquence d'échantillonnage déterminant la succession des valeurs de ce signal logique. Chaque signal logique est supposé définir la séquence de bits correspondant à l'entier du code-barres en question.

Le document US 2006/0082557 divulgue également un dispositif de lecture de codes-barres à l'aide d'un capteur de lumière. Lors de la lecture d'un code-barres, une succession d'images partielles sont détectées et ensuite elles sont traitées, à l'aide d'un algorithme de corrélation, pour obtenir une image composite formant une certaine image analogique correspondant à l'entier du code-barres. Ensuite, l'image analogique est traitée pour définir des flancs dans le profil de lumière donné par cette image analogique et pour pouvoir finalement décoder l'image ainsi traitée et fournir finalement une séquence de bits correspondante.

### Résumé de l'invention

La présente invention a pour but de fournir un dispositif de lecture de codes-barres peu encombrant et d'utilisation facile dans de nombreuses situations. En particulier, la présente invention a pour objectif de fournir un dispositif de lecture qui soit portable et dont le mouvement relatif nécessaire au scan puisse être effectué par un utilisateur sans contrôle de la vitesse relative ou un dispositif de lecture fixe qui puisse lire un code-barres sur un objet ayant un mouvement à vitesse non constante.

A cet effet, la présente invention a pour objet un procédé de lecture d'un code-barres au moyen d'un dispositif de lecture optique tel que défini à la revendication 1. Ce dispositif de lecture est agencé pour capturer, avec une fréquence d'échantillonnage déterminée, une succession d'images partielles du code-barres par un capteur ayant au moins une ligne de pixels, le code-barres comprenant une pluralité de barres avec des largeurs variables qui définissent une séquence de bits.

Dans le cadre de ce procédé de lecture il est prévu que :

A) le capteur est déplacé le long du code-barres parallèlement à la ligne de pixels avec une vitesse de déplacement quelconque qui est inférieure à une vitesse maximale, cette vitesse maximale étant définie de manière que le décalage entre deux images partielles successives soit inférieur à la largeur de l'image d'une barre unité du code-barres ;

B) la longueur de la ligne de pixels est inférieure à la longueur de l'image théorique du code-barres au niveau du capteur et supérieure à la largeur de l'image d'une barre de largeur maximale sur le capteur ;

C) pour chaque image partielle capturée par le capteur, une valeur logique est déterminée par le niveau de l'intensité lumineuse reçue par au moins un pixel situé sensiblement au centre de la ligne de pixels.

Ensuite, le procédé de lecture comprend les étapes suivantes :

D) pour chaque image partielle capturée par le capteur, la largeur de la barre correspondant à la valeur logique déterminée, lorsque cette dernière est définie comme égale à '1' ou '0' et au moins lorsque qu'elle n'est pas identique à une valeur logique définie pour une image partielle précédente, est mesurée dans le cas où cette barre est entièrement incorporée dans cette image partielle; cette largeur, lorsqu'elle est définie - c'est-à-dire mesurée et jugée assimilable à un nombre entier de barres unité -, étant associée à ce nombre entier de barres unité et ainsi à ce nombre entier de bits identiques qui ont chacun la valeur logique déterminée ;

E) lorsque pour deux images partielles successives on obtient une même valeur logique définie et lorsque la largeur de la barre correspondante est définie, le nombre entier de bits identiques associé à cette largeur est conservé une seule fois pour l'établissement de la séquence de bits pour le code-barres lu.

Finalement, la séquence de bits est formée par la succession des nombres entiers de bits identiques qui sont déterminés à l'étape D), en éliminant les doublons selon l'étape E), pour la succession d'images partielles du code-barres.

Grâce aux caractéristiques du procédé de lecture de l'invention, il est possible de lire de manière fiable un code-barres à l'aide d'un capteur de relativement petites dimensions en scannant le code-barres sans contrôle ou asservissement de la vitesse de défilement / de déplacement relatif entre le capteur et le code-barres, seule une vitesse maximale étant imposée. Cette vitesse maximale peut être élevée de sorte qu'elle ne limite en pratique pas l'utilisation du dispositif de lecture.

D'autres caractéristiques particulières de l'invention seront exposées ci-après dans la description détaillée de l'invention.

Brève description des dessins

L'invention sera décrite ci-après à l'aide de dessins annexés, donnés à titre d'exemples nullement limitatifs, dans lesquels :

- La Figure 1 montre schématiquement un dispositif de lecture pour la mise en ouvre du procédé de lecture d'un code-barres selon l'invention ;

- La Figure 2 montre schématiquement une partie de l'image théorique d'un code-barres au niveau d'un capteur du dispositif de lecture lors d'une lecture d'un code-barres selon l'invention ;

- La Figure 3 est un graphe de l'intensité lumineuse reçue par le capteur du dispositif de lecture lorsque ce capteur est positionné relativement au code-barres dans la configuration de la Figure 2 ; et

- La Figure 4 montre schématiquement le fonctionnement de l'algorithme selon le procédé de l'invention pour le décodage de la séquence logique définie par un exemple de code-barres.

Description détaillée de l'invention

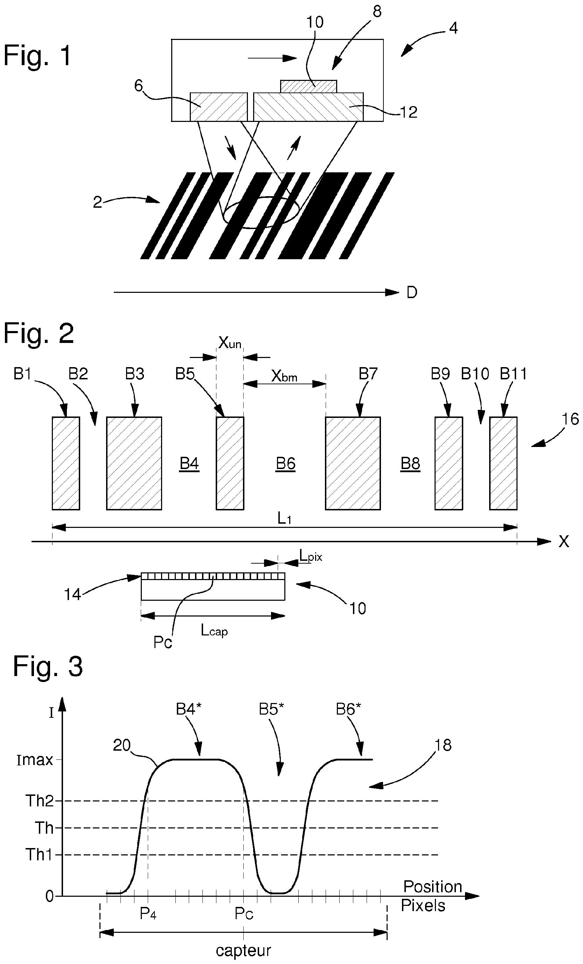

En référence aux Figures 1 à 4, on décrira ci-après un mode de mise en oeuvre du procédé de lecture d'un code-barres selon l'invention. Il est prévu d'utiliser un dispositif de lecture 4 avec une source de lumière 6 qui envoie un faisceau lumineux en direction du code-barres 2 à lire. Le faisceau réfléchi est au moins partiellement incident sur le récepteur 8 qui comprend un capteur optique 10 et une optique de focalisation 12 agencée devant le capteur 10 pour former une image partielle du code-barres sur ce capteur, c'est-à-dire sur les pixels du capteur.

Le capteur 10 comprend au moins une ligne de pixels 14 selon la direction de déplacement D prévue pour le dispositif de lecture. Le dispositif de lecture optique 4 est agencé pour capturer, avec une fréquence d'échantillonnage déterminée, une succession d'images partielles 18 du code-barres 2 au moins sur la ligne de pixels 14.

Le code-barres comprend une pluralité de barres avec des largeurs variables qui définissent une séquence de bits. Les barres du code-barres sont réduites d'un certain facteur par l'optique de focalisation 12 de sorte qu'ils présentent des largeurs réduites dans l'image formée sur le capteur 10. Au niveau du capteur on définit un axe X parallèle à la ligne de pixels 14 et à la direction de déplacement D du dispositif de lecture. Sur cet axe X sont données les largeurs des images des diverses barres du code-barres. A la Figure 2, l'image théorique 16 du code-barres (ou d'une partie de celui-ci) est représentée. On parle ici d'image théorique lorsqu'une représentation du code-barres sur l'axe X a une dimension globale supérieure à la longueur $L_{cap}$ du capteur de sorte qu'elle correspond à la synthèse de plusieurs images partielles au niveau du capteur lorsque ce dernier est déplacé le long de l'axe X. Ainsi les largeurs des barres de cette image théorique sont bien celles résultant des images partielles capturées par le capteur.

A la Figure 2, l'image théorique 16 est formée d'une pluralité de barres B1 à B11 et a une longueur L1. Les barres B1, B2, B5, B9, B10 et B11 sont des barres unité ayant une largeur unité $X_{un}$. Elles correspondent chacune à une seule information logique (bit '1' ou '0'). D'autres barres B3, B4, B7 et B8 ont une largeur double relativement à une barre unité. Elles correspondent à la succession de deux bits identiques (double '1' ou double '0'). Finalement, la barre B6 a une largeur triple relativement à une barre unité. Elle correspond à une succession de trois bits identiques. Dans l'exemple donné sur les Figures, la largeur triple correspond à la largeur maximale $X_{bm}$ pour une barre du code-barres à lire.

La ligne de pixels 14 est composée de vingt-et-un pixels de longueur $L_{pix}$ (dimension d'un pixel selon l'axe X). On notera qu'il est possible de prévoir plusieurs lignes de pixels parallèles. Dans ce cas, les intensités lumineuses reçues par les pixels ayant une même position sur l'axe X peuvent être moyennées ou additionnées selon des variantes du procédé de lecture de l'invention. Le pixel central $P_c$ du capteur 10 joue un rôle important dans le procédé de l'invention car c'est l'intensité lumineuse reçue par ce pixel central qui détermine dans une image partielle capturée la seule information logique retenue et exploitée dans cette image partielle, comme ceci sera exposé par la suite. On remarquera toutefois qu'il est possible dans des variantes de prendre plusieurs pixels de la zone centrale, par exemple deux ou trois, pour définir la seule information logique exploitée. Ainsi, par exemple, dans le cas où le nombre de pixels de la ligne de pixels est un nombre pair, on peut considérer les deux pixels au centre. Lorsque ces deux pixels ne définissent pas une même valeur logique (bit '0' ou '1'), on dira que la valeur logique pour l'image partielle en question est non-définie.

La valeur logique pour une image partielle donnée est donc définie par le pixel central $P_c$ ou par quelques pixels de la zone centrale d'au moins une ligne de pixels du capteur optique. Pour déterminer la valeur logique du pixel central Pc, on mesure l'intensité lumineuse reçue par ce pixel central sur la courbe d'intensité 20 d'une image partielle 18. A la Figure 3, la courbe 20 résulte de la capture d'une image partielle avec un positionnement du capteur optique 10 selon la Figure 2. Cette courbe 20 est formée par les profils d'intensité B4* et B5* correspondant respectivement à la détection complète des barres B4 et B5 ; ainsi qu'au profil d'intensité partiel B6* correspondant à une partie de la barre B6. Dans une première variante, il est prévu une seule valeur de seuil Th correspondant sensiblement à une intensité moyenne entre l'intensité lumineuse minimale et l'intensité lumineuse maximale $I_{max}$. Dans ce cas, une valeur logique sera toujours définie. Dans une autre variante, il est prévu une valeur de seuil inférieur Th1 et une valeur de seuil supérieure Th2. Lorsque l'intensité lumineuse détectée est inférieure à Th1, la valeur logique est '1' et lorsque la valeur logique est supérieure à Th2, la valeur logique est '0'. La détection d'une intensité lumineuse entre Th1 et Th2 donne une valeur logique non définie. Dans l'exemple de la Figure 3, les deux variantes donnent une valeur logique '0' correspondant à la valeur logique associée à la barre B4.

Il est ensuite prévu de déterminer la largeur du bloc B4 détecté par le pixel central $P_c$, de manière à déterminer le nombre de bits identiques défini par ce bloc B4. On notera que cette largeur ne peut être mesurée dans une image partielle que si l'entier du bloc est présent dans cette image partielle. C'est le cas à la Figure 3. Les pixels P4 à $P_c$ = P11 reçoivent tous une intensité lumineuse supérieure à TH2. Ainsi la largeur de la barre B4 est déterminée comme égale à huit fois la longueur $L_{pix}$ d'un pixel. Dans l'exemple représenté aux Figures 2 et 3, la largeur $X_{un}$ d'une barre unité est égale à quatre fois la longueur $L_{pix}$. Par conséquent, la barre B4 correspond à une barre double, c'est-à-dire à un double '0'. On notera que si la détermination de la largeur de la barre B4 avait donné comme résultat sept ou neuf fois la longueur $L_{pix}$, l'algorithme décide qu'il s'agit d'une barre double. Par contre, si on a six ou dix pixels avec la même valeur logique dans ce cas-ci, la largeur est non définie car exactement entre deux largeurs de barre standards. Cette largeur peut éventuellement être encore déterminée correctement dans une image partielle suivante, notamment lorsqu'il ne s'agit pas d'une barre de largeur maximale comme on le comprendra par la suite. Si ce n'est pas le cas, il y a un échec de lecture et le dispositif de lecture indiquera ce fait.

Suite à l'exposé donné ci-avant en relation avec les Figures 1 à 3, on peut maintenant exposer les diverses étapes du procédé de lecture selon l'invention. Ce procédé comporte les étapes suivantes :

A) le capteur 10 est déplacé le long du code-barres 2 parallèlement à la ligne de pixels 14 avec une vitesse de déplacement relative quelconque qui est prévue inférieure à une vitesse maximale $V_{max}$ donnée, cette vitesse maximale étant définie de manière que le décalage entre deux images partielles successives soit inférieur à la largeur $X_{un}$ de l'image d'une barre unité du code-barres 2 ;

B) la longueur $L_{cap}$ de la ligne de pixels 14 est inférieure à la longueur de l'image théorique L1 du code-barres au niveau du capteur et supérieure à la largeur $X_{bm}$ de l'image d'une barre de largeur maximale sur le capteur ;

C) pour chaque image partielle capturée par le capteur, une valeur logique est déterminée par le niveau de l'intensité lumineuse I reçue par au moins un pixel $P_c$ situé sensiblement au centre de la ligne de pixels 14 ;

D) pour chaque image partielle capturée par le capteur, la largeur de la barre correspondant à ladite valeur logique, lorsque cette dernière est définie, est mesurée dans le cas où cette barre est entièrement incorporée dans cette image partielle ;

E) lorsque pour deux images partielles successives on obtient une même valeur logique à l'étape C), une seule valeur logique et la largeur de la barre correspondante sont conservées pour l'établissement de ladite séquence de bits.

Comme déjà exposé précédemment, on notera que la valeur logique déterminée à l'étape C) peut être soit définie et valoir '1' ou '0', soit non définie. De même dans l'étape D), lorsque la barre correspondant à la valeur logique mesurée par le pixel central $P_c$ n'est pas entièrement incorporée dans l'image partielle capturée, cette largeur est non définie pour cette image partielle.

L'étape A) est remarquable par le fait qu'aucune vitesse constante n'est requise, seule une vitesse maximale $V_{max}$ est donnée par une condition du procédé, à savoir que le décalage entre deux images partielles successives soit inférieur à la largeur $X_{un}$ de l'image d'une barre unité du code-barres. On comprend donc que cette vitesse maximale est une fonction de la fréquence d'échantillonnage $F_{flash}$ et de la largeur de l'image d'une barre unité (donc la largeur réelle et le facteur de réduction de l'optique de focalisation du dispositif de lecture sont des paramètres déterminant la vitesse maximale autorisée). Si par exemple l'image d'une barre unité a une largeur $X_{un}$ = 1 mm et la fréquence des flashs $F_{flash}$ vaut 100 Hz, on a Vmax < $X_{un} \cdot F_{flash}$ = 0,001·100 = 0.1 ms$^{-1}$. Dans cet exemple, on peut donc déplacer le dispositif de lecture avec une vitesse quelconque inférieure à 10 cm/s. En augmentant $F_{flash}$, on augmente la vitesse maximale de manière proportionnelle. Ainsi, avec $F_{flash}$ = 500 Hz, on peut avoir une vitesse de défilement du code-barres de 50 cm/s ; ce qui est une vitesse relativement élevée et généralement suffisante pour une lecture manuelle d'un code-barres. On notera que la vitesse de défilement peut varier au cours de la lecture d'un code-barres.

L'étape A) a pour objectif d'assurer que chaque barre, en particulier chaque barre unité, soit détectée. En d'autres termes, dans le cadre de l'invention, l'étape A) assure que chaque barre soit au moins une fois détectée par le pixel central $P_c$ ou par les pixels de la zone centrale de la ligne de pixel 14 selon la variante choisie.

Dans une variante préférée, pour augmenter la sécurité de détection, il est prévu que la vitesse maximale $V_{max}$ est choisie de manière que le déplacement entre deux images partielles successives sur le capteur 10 soit inférieur ou égal à la largeur $X_{un}$ de l'image d'une barre unité diminuée de la dimension $L_{pix}$ d'un pixel du capteur selon l'axe X (direction de déplacement du dispositif de lecture). Dans une autre variante préférée qui se combine avantageusement avec la variante préférée susmentionnée, l'image de la barre unité sur le capteur présente une largeur $X_{un}$ supérieure à trois fois la dimension $L_{pix}$ d'un pixel du capteur selon l'axe X.

L'étape B) mentionne que le dispositif de lecture ne peut fonctionner qu'avec un scan du code-barres. Ensuite, Il a pour objectif d'assurer qu'une barre de largeur maximale $X_{bm}$ puisse être capturée entièrement dans au moins une image partielle pour que sa largeur puisse être déterminée dans cette au moins une image partielle. Dans une variante préférée de l'invention, il est prévu que la longueur de la ligne de pixels $L_{cap}$ est égale ou supérieure à la somme de la largeur $X_{bm}$ de l'image d'une barre de largeur maximale, de la largeur $X_{un}$ de l'image d'une barre unité et de trois fois la dimension $L_{pix}$ d'un pixel du capteur selon l'axe X (direction de déplacement du dispositif de lecture). S'agissant du nombre de pixels minimum $Nb_{pix}^{min}$ de la ligne de pixels 14, il est prévu dans le cadre de cette variante préférée que $Nb_{pix}^{min}$ soit donné par la formule mathématique suivante :

$$Nb_{pix}^{min} = INT [ NPUB + NPBLM ] + 4$$

où NPUB est le nombre réel de pixels correspondant à l'image d'une barre unité (NPUB = 4 dans l'exemple des Figures 2 et 3) et NPBLM est le nombre réel de pixels correspondant à l'image d'une barre de largeur maximale (NPBLM = 3·4 = 12 dans l'exemple des Figures 2 et 3). INT[Y] est la fonction nombre entier de Y.

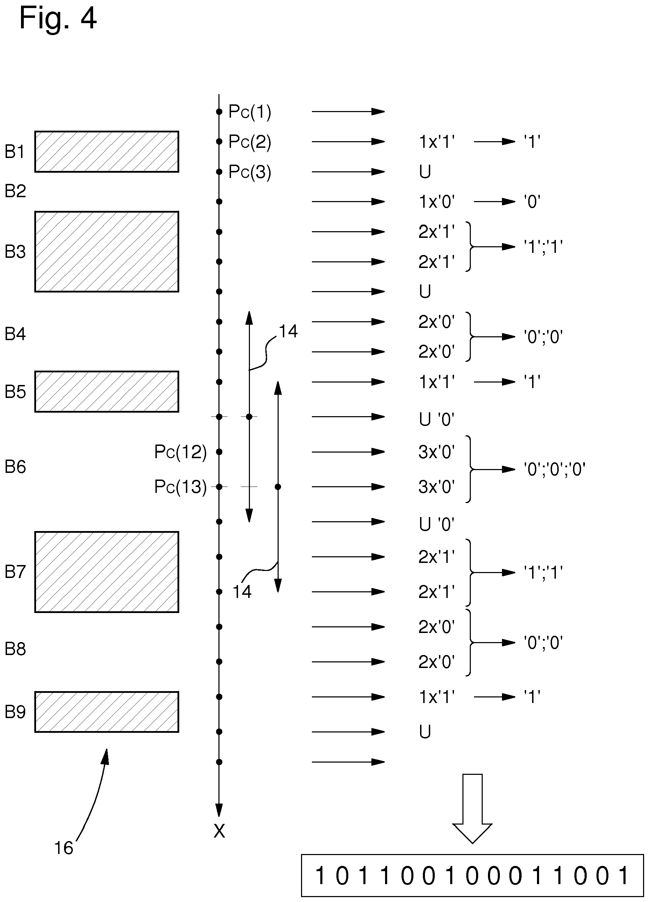

Les étapes C) à E) du procédé de lecture seront illustrées à l'aide de la Figure 4. Sur cette Figure 4, on a représenté l'image théorique 16 d'un code-barres. Sur l'axe X sont représentées successivement les positions $P_c(n)$ du pixel central $P_c$ pour une pluralité d'images partielles successives résultant d'une certaine vitesse de défilement et de la fréquence d'échantillonnage (aussi nommée fréquence des flashs ou fréquence de capture d'images partielles). Pour ne pas charger le dessin, on a représenté l'étendue de la ligne de pixels 14 du capteur 10 pour seulement deux positions $P_c(11)$ et $P_c(13)$. Lors d'un déplacement relatif du dispositif de lecture 4 par rapport au code-barres, ce dispositif de lecture détermine à la position $P_c(2)$ une valeur logique '1' et il mesure aisément une largeur unité $X_{un}$. L'algorithme implémenté dans le dispositif de lecture enregistre 1x'1' (une fois la valeur logique '1'). Dans la position suivante, le pixel central est situé exactement à l'interface entre deux barres. On obtient ainsi une valeur logique non définie, marquée U. Aucune largeur de barre n'est mesurée dans la variante représentée. Ensuite, l'algorithme enregistre 1x'0' dans l'image partielle suivante.

On arrive ensuite à la barre B3 de largeur double. Dans la position $P_c(5)$, le capteur détermine une valeur logique '1' et une largeur double. L'algorithme enregistre 2x'1' (deux fois la valeur logique '1'). Dans la position suivante $P_c(6)$, la valeur logique du pixel central reste '1'. A nouveau on mesure une largeur double. L'algorithme ignore finalement ce nouveau résultat car la valeur logique n'a pas changé. Il peut dans un premier temps enregistrer les deux résultats identiques et enlever les doublons dans une étape ultérieure. On notera que dès qu'il détecte une même valeur logique dans deux images partielles successives, l'algorithme peut s'abstenir de mesurer à nouveau la largeur de la barre puisqu'il s'agit obligatoirement de la même barre. Une nouvelle mesure de la largeur peut toutefois servir de mesure de confirmation ou à préciser la largeur de la barre dans le cas où le résultat précédent ne permet pas de déterminer clairement cette largeur. On collecte ainsi de suite des valeurs logiques alternatives avec les largeurs des barres correspondantes.

A la position $P_c(11)$, on détermine sur le pixel central une valeur logique '0', mais la barre correspondante n'est pas entièrement incorporée dans l'image partielle en question (il s'agit ici d'une barre de largeur maximale $X_{bm}$). L'algorithme enregistre U'0', c'est-à-dire une valeur logique '0' avec une largeur de barre non définie. Dans ce cas, il peut aussi ignorer la valeur logique et attendre la prochaine image partielle pour enregistrer les données relatives à la barre non définie. Toutefois, il est utile de contrôler que la valeur logique suivante soit bien identique car, si la valeur logique suivante n'était pas identique, il y aurait un échec de lecture. Dans les deux images partielles suivantes, le dispositif de mesure détecte la barre B6 et enregistre au moins une fois 3x'0'. Finalement, l'algorithme ne retient qu'une seule barre 3x'0', soit trois fois la valeur logique '0'. Ainsi, le dispositif de lecture selon l'invention reconstitue fidèlement la séquence logique correspondant au code-barres lu, comme indiqué au bas de la Figure 4.

**Revendications**

1. Procédé de lecture d'un code-barres (2) au moyen d'un dispositif de lecture optique (4) comprenant un capteur (10) ayant au moins une ligne de pixels (14) selon une direction de déplacement prévue pour le dispositif de lecture optique, ce capteur étant agencé pour pouvoir capturer, avec une fréquence d'échantillonnage déterminée, une succession d'images partielles (18) du code-barres formées chacune au moins sur ladite ligne de pixels, le code-barres comprenant une pluralité de barres (B1-B11) avec des largeurs variables qui définissent une séquence de bits ;

   ce procédé étant **caractérisé en ce que** :

   A) le capteur (10) est déplacé le long du code-barres parallèlement à ladite ligne de pixels (14) avec une vitesse de déplacement quelconque qui est inférieure à une vitesse maximale, cette vitesse maximale étant définie de manière que le décalage entre deux images partielles successives soit inférieur à la largeur ($X_{un}$) de l'image d'une barre unité dudit code-barres ;

   B) la longueur ($L_{cap}$) de ladite ligne de pixels (14) est inférieure à la longueur (L1) de l'image théorique du code-barres au niveau du capteur et supérieure à la largeur ($X_{bm}$) de l'image d'une barre de largeur maximale sur le capteur ;

   C) pour chaque image partielle capturée par le capteur (10), une valeur logique est déterminée par le niveau de l'intensité lumineuse (I) reçue par au moins un pixel ($P_c$) situé sensiblement au centre de ladite ligne de pixels ;

   D) pour chaque image partielle capturée par le capteur (10), la largeur de la barre correspondant à ladite valeur logique, lorsque cette dernière est définie - c'est-à-dire égale à '1' ou '0' - et au moins lorsque qu'elle n'est pas identique à une valeur logique définie pour une image partielle précédente, est mesurée dans le cas où cette barre est entièrement incorporée dans cette image partielle ; ladite largeur, lorsqu'elle est définie - c'est-à-dire mesurée et jugée assimilable à un nombre entier de barres unité -, étant associée à ce nombre entier de barres unité et ainsi à ce nombre entier de bits identiques qui ont chacun ladite valeur logique ;

   E) lorsque pour deux images partielles successives on obtient une même valeur logique définie et lorsque la largeur de la barre correspondante est définie, le nombre entier de bits identiques associé à cette largeur est conservé une seule fois pour l'établissement de ladite séquence de bits ;

ladite séquence de bits étant formée par la succession des nombres entiers de bits identiques qui sont déterminés à l'étape D), en éliminant les doublons selon l'étape E), pour ladite succession d'images partielles du code-barres.

2. Procédé de lecture d'un code-barres selon la revendication 1, **caractérisé en ce que** ladite largeur de barre mesurée à l'étape D) est considérée comme non définie dans le cas où la barre correspondante n'est pas entièrement incorporée dans l'image partielle considérée, de sorte que cette image partielle est ignorée dans l'établissement de ladite séquence de bits.

3. Procédé de lecture d'un code-barres selon la revendication 1 ou 2, **caractérisé en ce que** l'image de ladite barre unité sur ledit capteur présente une largeur ($X_{un}$) qui est supérieure à trois fois la dimension ($L_{pix}$) d'un pixel du capteur selon la direction de déplacement du dispositif de lecture.

4. Procédé de lecture d'un code-barres selon l'une des revendications précédentes, **caractérisé en ce que** ladite longueur ($L_{cap}$) de ladite ligne de pixels est égale ou supérieure à la somme de la largeur ($X_{bm}$) de l'image de ladite barre de largeur maximale, de la largeur ($X_{un}$) de l'image de ladite barre unité et de trois fois la dimension ($L_{pix}$) d'un pixel du capteur selon la direction de déplacement du dispositif de lecture.

5. Procédé de lecture d'un code-barres selon la revendication 4, **caractérisé en ce que** le nombre de pixels de ladite ligne de pixels du capteur est supérieur ou égal au nombre de pixels minimum $Nb_{pix}^{min}$ donné par la formule mathématique suivante :

$$Nb_{pix}^{min} = INT\ [\ NPUB + NPBLM\ ] + 4$$

où NPUB est le nombre réel de pixels correspondant à l'image d'une barre unité et NPBLM est le nombre réel de pixels correspondant à une barre de largeur maximale.

6. Procédé de lecture d'un code-barres selon l'une quelconque des revendications précédentes, **caractérisé en ce que** ladite vitesse maximale est choisie de manière que le déplacement entre deux images partielles successives sur le capteur soit inférieur ou égal à la largeur ($X_{un}$) de l'image de ladite barre unité diminuée de la dimension d'un pixel ($L_{pix}$) du capteur selon la direction de déplacement du dispositif de lecture.

**Patentansprüche**

1. Verfahren zum Lesen eines Barcodes (2) mittels einer optischen Lesevorrichtung (4), umfassend einen Sensor (10) mit mindestens einer Pixelzeile (14) in einer für die optische Lesevorrichtung vorgesehenen Bewegungsrichtung, wobei dieser Sensor zum Erfassen einer Folge von Teilbildern (18) des Barcodes, die jeweils zumindest auf der Pixelzeile gebildet sind, mit einer bestimmten Abtastfrequenz angeordnet ist, wobei der Barcode mehrere Striche (B1-B11) mit unterschiedlichen Breiten aufweist, die eine Bitfolge definieren;
wobei dieses Verfahren **dadurch gekennzeichnet ist, dass**:

A) der Sensor (10) entlang des Barcodes parallel zu der Pixelzeile (14) mit einer beliebigen Verschiebungsgeschwindigkeit, die niedriger als eine Maximalgeschwindigkeit ist, bewegt wird, wobei diese Maximalgeschwindigkeit so definiert ist, dass der Versatz zwischen zwei aufeinanderfolgenden Teilbildern kleiner als die Breite ($X_{un}$) des Bildes eines Einheitsstrichs des Barcodes ist;
B) die Länge ($L_{cap}$) der Pixelzeile (14) kleiner ist als die Länge (L1) des theoretischen Bildes des Barcodes am Sensor und größer ist als die Breite ($X_{bm}$) des Bildes eines Strichs mit maximaler Breite am Sensor;
C) für jedes vom Sensor (10) erfasste Teilbild ein logischer Wert durch den Pegel der Lichtstärke (I) bestimmt wird, die von mindestens einem Pixel ($P_c$) empfangen wird, das sich im Wesentlichen in der Mitte der Pixelzeile befindet;
D) für jedes von dem Sensor (10) erfasste Teilbild die Breite des Strichs, die dem logischen Wert entspricht, wenn dieser Letztere definiert ist - d. h. gleich "1" oder "0" ist - und mindestens wenn er nicht mit einem logischen Wert übereinstimmt, der für ein vorhergehendes Teilbild definiert ist, in dem Fall gemessen wird, in dem dieser Strich vollständig in diesem Teilbild enthalten ist; wobei die Breite dann, wenn sie definiert ist, - d. h. gemessen und als mit einer ganzen Zahl von Einheitsstrichen vergleichbar beurteilt wird - dieser ganzen Zahl von Einheitsstrichen und somit dieser ganzen Zahl identischer Bits, die jeweils den logischen Wert besitzen, zugeordnet wird;
E) dann, wenn für zwei aufeinanderfolgende Teilbilder derselbe definierte logische Wert erhalten wird und wenn die Breite des entsprechenden Strichs definiert ist, die ganze Zahl identischer Bits, die dieser Breite zugeordnet ist, nur einmal für die Festlegung der Bitfolge beibehalten wird;

wobei die Bitfolge gebildet wird durch die Folge ganzer Zahlen identischer Bits, die im Schritt D) bestimmt wurden, indem die Duplikate gemäß Schritt E) für die Folge von Teilbildern des Barcodes entfernt werden.

2. Verfahren zum Lesen eines Barcodes nach Anspruch 1, **dadurch gekennzeichnet, dass** die im Schritt D) gemessene Strichbreite als nicht definiert angesehen wird, falls der entsprechende Strich nicht vollständig in dem betrachteten Teilbild enthalten ist, derart, dass dieses Teilbild bei der Festlegung der Bitfolge ignoriert wird.

3. Verfahren zum Lesen eines Barcodes nach Anspruch 1 oder 2, **dadurch gekennzeichnet, dass** das Bild des Einheitsstrichs am Sensor eine Breite ($X_{un}$) aufweist, die größer als die dreifache Abmessung ($L_{pix}$) eines Pixels des Sensors in der Bewegungsrichtung der Lesevorrichtung ist.

4. Verfahren zum Lesen eines Barcodes nach einem der vorhergehenden Ansprüche, **dadurch gekennzeichnet, dass** die Länge ($L_{cap}$) der Pixelzeile gleich oder größer als die Summe der Breite ($X_{bm}$) des Bildes des Strichs mit maximaler Breite, der Breite ($X_{un}$) des Bildes des Einheitsstrichs und der dreifachen Abmessung ($L_{pix}$) eines Pixels des Sensors in der Bewegungsrichtung der Lesevorrichtung ist.

5. Verfahren zum Lesen eines Barcodes nach Anspruch 4, **dadurch gekennzeichnet, dass** die Anzahl von Pixeln der Pixelzeile des Sensors größer oder gleich der minimalen Anzahl $Nb_{pix}^{min}$ von Pixeln ist, die durch die folgende mathematische Formel gegeben ist:

$$Nb_{pix}^{min} = INT[NPUB + NPBLM] + 4$$

wobei NPUB die tatsächliche Anzahl der Pixel ist, die dem Bild eines Einheitsstrichs entspricht, und NPBLM die tatsächliche Anzahl der Pixel ist, die einem Strich mit maximaler Breite entspricht.

6. Verfahren zum Lesen eines Barcodes nach einem der vorhergehenden Ansprüche, **dadurch gekennzeichnet, dass** die maximale Geschwindigkeit so gewählt wird, dass die Verschiebung zwischen zwei aufeinanderfolgenden Teilbildern am Sensor kleiner oder gleich der Breite ($X_{un}$) des Bildes des Einheitsstrichs verringert um die Dimension eines Pixels ($L_{pix}$) des Sensors in der Bewegungsrichtung der Lesevorrichtung ist.

**Claims**

1. Method for reading a barcode (2) by means of an optical reader (4) comprising a sensor (10) having at least one line of pixels (14) in a direction of movement provided for the optical reading device, this sensor being arranged to be able to capture, at a determined sampling frequency, a series of partial images (18) of the barcode each formed at least on said line of pixels, the barcode comprising a plurality of bars (B1-B11) of variable widths that define a bit sequence;
this method being **characterised in that**:

   A) the sensor (10) is moved along the barcode parallel to said line of pixels (14) at any speed of movement less than a maximum speed, wherein this maximum speed is defined so that the shift between two consecutive partial images is less than the width ($X_{un}$) of the image of a bar unit of said barcode;
   B) the length ($L_{cap}$) of said line of pixels (14) is less than the length (L1) of the theoretical image of the barcode at the sensor and more than the width ($X_{bm}$) of the image of a bar of maximum width on the sensor;
   C) for each partial image captured by the sensor (10) a logical value is determined by the level of light intensity (I) received by at least one pixel ($P_c$) located more or less in the centre of said line of pixels;
   D) for each partial image captured by the sensor (10), the width of the bar corresponding to said logical value, when this is defined - that is to say equal to 1 or 0 - and at least when it is not identical to a logical value defined for a previous partial image, is measured when this bar is incorporated completely into this partial image; said width, when it is defined - that is to say measured and judged corresponding to an integer number of bar units - being associated with this integer number of bar units and thus with this integer number of identical bits that each have said logical value;
   E) when the same defined logical value is obtained for two consecutive partial images and when the width of the corresponding bar is defined, the integer number of identical bits associated with this width is retained only once for establishing said sequence of bits;

   said sequence of bits being formed by the succession of integer numbers of identical bits that are determined at step D), by eliminating the doublets according to step E), for said succession of partial images of the barcode.

2. Method for reading a barcode according to claim 1, **characterised in that** said bar width measured at step D) is considered to be undefined in the case where the corresponding barcode is not fully incorporated in the partial image in question, so that this partial image is ignored in establishing said bit sequence.

3. Method for reading a barcode according to claim 1 or 2, **characterised in that** the image of said bar unit on said sensor has a width ($X_{un}$), which is at least three times larger than the dimension ($L_{pix}$) of a pixel of the sensor in the direction of movement of the reader.

4. Method for reading a barcode according to one of the preceding claims, **characterised in that** said length ($L_{cap}$) of said line of pixels is equal to or greater than the sum of the width ($X_{bm}$) of the image of said bar of maximum width, the width ($X_{un}$) of the image of said bar unit and three times the dimension ($L_{pix}$) of a pixel of the sensor in the direction of movement of the reader.

5. Method for reading a barcode according to claim 4, **characterised in that** the number of pixels of said line of pixels of the sensor is more than or equal to the minimum number of pixels $Nb_{pix}{}^{min}$ given by the following mathematical formula:

$$Nb_{pix}{}^{min} = INT\ [\ NPUB + NPBLM\ ] + 4$$

   where NPUB is the real number of pixels corresponding to the image of a bar unit and NPBLM is the real number of pixels corresponding to the image of a bar of maximum width.

6. Method for reading a barcode according to any one of the preceding claims, **characterised in that** said maximum speed is chosen so that the shift between two consecutive partial images on the sensor is less than or equal to the width ($X_{un}$) of the image of said bar unit reduced by the dimension of a pixel ($L_{pix}$) of the sensor in the direction of movement of the reader.

**Fig. 1**

10  8  4

6  12

2

D

**Fig. 2**

$X_{un}$

B1  B2  B3  B5  $X_{bm}$  B7  B9 B10 B11

16

$\underline{B4}$  $\underline{B6}$  $\underline{B8}$

$L_1$

X

$L_{pix}$

14  10

Pc  $L_{cap}$

**Fig. 3**

I

B4*  B5*  B6*

Imax

20  18

Th2

Th

Th1

0

Position
Pixels

$P_4$  Pc

capteur

# Fig. 4

B1

B2

B3

B4

B5

B6

B7

B8

B9

16

Pc(1)

Pc(2) → 1x'1' → '1'

Pc(3) → U

→ 1x'0' → '0'

→ 2x'1' }
→ 2x'1' } → '1';'1'

→ U

14 → 2x'0' }
→ 2x'0' } → '0';'0'

→ 1x'1' → '1'

→ U '0'

Pc(12) → 3x'0' }
→ 3x'0' } → '0';'0';'0'

Pc(13) → U '0'

14 → 2x'1' }
→ 2x'1' } → '1';'1'

→ 2x'0' }
→ 2x'0' } → '0';'0'

→ 1x'1' → '1'

→ U

X

| 1 0 1 1 0 0 1 0 0 0 1 1 0 0 1 |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5272323 A
- US 20090110325 A
- US 20060082557 A